# NEUE EUROPÄISCHE PATENTSCHRIFT

(11) **EP 0 866 834 B2**
(45) Veröffentlichungstag und Bekanntmachung des Hinweises auf die Entscheidung über den Einspruch: **08.03.2006**
(45) Hinweis auf die Patenterteilung: 21.05.2003
(21) Anmeldenummer: 96943924.9
(22) Anmeldetag: 12.12.1996
(51) Int. Cl.: C08K 5/098, C08L 23/16

(54) **ANTRIEBSRIEMEN**
DRIVE BELT
COURROIE DE TRANSMISSION

(30) Priorität: 15.12.1995 DE 19547025
(43) Veröffentlichungstag der Anmeldung: 30.09.1998
(73) Patentinhaber: ContiTech Antriebssysteme GmbH, 30165 Hannover (DE)
(72) Erfinder: HERRMANN, Wolfram, D-31515 Wunstorf (DE)
(74) Vertreter: Finger, Karsten
(86) Internationale Anmeldenummer: PCT/EP1996/005547
(87) Internationale Veröffentlichungsnummer: WO 1997/022662

(56) Entgegenhaltungen:
- EP-A- 0 570 159
- EP-A- 0 590 423
- WO-A-96/13544
- DE-A- 4 222 760
- DE-A- 4 309 893
- DE-A- 19 547 025
- JP-A- 4 339 843
- US-A- 4 713 409
- Review, John A. Riedel and Robert Vander Laan, Vanderbilt Rubber Handbook, 13th Edition (1990)
- Product Data Sheets for: Japan Synethetic Rubber-EP polymers, Du Pont-NORDEL polymers, DSM Keltan polymers and Exxon VISTALON

## Beschreibung

Die Erfindung betrifft einen Antriebsriemen mit im wesentlichen einer elastomeren Decklage, Festigkeitsträgern und einem elastomeren Grundkörper.

An Antriebsriemen werden unterschiedlichste Anforderungen gestellt. So müssen sie z.B. einer hohen dynamischen Beanspruchung standhalten, gute Alterungsbeständigkeit und einen geringen Abrieb aufweisen. Außerdem sollten sie eine hervorragende Kälteflexibilität besitzen und bei Kontakt mit Öl ein geringes Quellungsverhalten zeigen. Einen entscheidenden Einfluß auf all diese Eigenschaften hat die elastomere Matrix (Decklage, Grundkörper) des Antriebsriemens. So sind für den Einsatz in Antriebsriemen Gummimaterialien auf der Basis von Ethylen-Propylen-Copolymerisat (EPM) bzw. Ethylen-Propylen-Dien-Copolymerisat (EPDM) bekannt. So offenbart die DE 42 22 760 Riemen aus einem Polymeren auf Ethylen-Basis, das mindestens 75 Mol-Prozent Ethylen-Einheiten aufweist. Es hat sich aber herausgestellt, daß ein Riemen, dessen Elastomer-Matrix aus EPDM/EPM mit einem solch hohen Ethylen-Gehalt aufgebaut ist, aufgrund der Kristallisation der Ethylenkette insbesondere bei Kälteeinfluß eine geringere dynamische Belastbarkeit aufweist. Dies spiegelt sich auch in einer höheren Glastemperatur wider. Deshalb sind diese Materialien für einen dynamisch belasteten Riemen nicht geeignet, insbesondere wenn der Einsatz bei Temperaturen bis -40°C erfolgen soll. Des weiteren sind in der WO 96/13544 Antriebsriemen offenbart, deren Elastomer-Matrix als Hauptbestandteil EPDM/EPM, 1 bis 30 Teile eines Metallsalzes einer ungesättigten organischen Säure und 0 bis 250 Teile eines Füllstoffs enthält. Diese Antriebsriemen sind aufgrund ihrer geringen Strukturfestigkeit nicht geeignet, hohe Leistungen zu übertragen. Darüber hinaus können sie schon bei einer kurzzeitigen öleinwirkung zum Ausfall neigen, so daß diese Riemen in verschiedenen Anwendungsbereichen, insbesondere wenn die Möglichkeit besteht, daß die Riemen mit Öl in Berührung kommt, nicht verwendet werden konnten.
Aus der EP-A-590423 ist ein Antriebsriemen bekannt, der aus einer schwefelvemetzten Zusammensetzung auf Basis von EPDM hergestellt ist. Die Zusammensetzung enthält weiterhin pro 100 Gew.-teile EPDM 33 Gew.-teile Zinkmethacrylat.

Die Aufgabe der vorliegenden Erfindung besteht darin, Antriebsriemen bereitzustellen, die während der gesamten Lebensdauer des Riemens hervorragende dynamische Eigenschaften auch beim Kälteeinsatz aufweisen. Darüber hinaus soll der Riemen auch ein geringes Ölquellungsverhaften zeigen.

Gelöst wird diese Aufgabe erfindungsgemäß dadurch, daß die Decklage und/oder der Grundkörper aus einer peroxydisch vernetzten Elastomermischung besteht, die bezogen auf 100 Teile Kautschuk 100 Teile eines Ethylen-Propylen-Dien-Copolymerisat (EPDM) mit einem Ethylengehalt bezogen auf das Gewicht des EPDM von 50 bis 65 Gewichtsprozent und einem Diengehalt des EPDM < 10 Gewichtsprozent enthält und gegebenenfalls weitere Bestandteile, wie Weichmacher und Füllstoffe, aufweist und daß die Elastomermischung zumindest ein Metallsalz eines α, β-ungesättigten Carbonsäurederivates in einer Menge von 32 bis 100 Teile enthält.

Das Polymer auf der Basis von Ethylen und Propylen (EPDM mit einem Ethylengehalt von 50 bis 65 Gewichtsprozent bezogen auf das Gesamtgewicht des eingesetzten Kautschukpolymerisats in Kombination mit 32 bis 100 Teile eines Zinksalzes eines Acrylsäurederivates für Antriebsriemen verleiht diesen auch bei niedrigeren Temperaturen ein hervorragendes dynamisches Verhalten. Im Gegensatz zu der DE 42 22 760 können jetzt auch Riemen bereitgestellt werden, die für hohe dynamische Belastungen bei niedrigen Temperaturen ausgelegt sind.
Es kommt EPDM zum Einsatz, da aufgrund der besseren peroxydischen Vernetzung dieses Polymers höhere Festigkeiten in Riemen bewirkt. Als Dien-Komponenten, deren Gehalt kleiner 10 Gewichtsprozent betragen soll, kommen z.B. 1,4-Hexadien, Dicyclopentadien, Ethylidennorbornen, Methylennorbornen und Methyltetrahydroinden zum Einsatz.

Das Metallsalz (z.B. das Calcium-, Aluminium-, Magnesium- oder Zinksalz) des α,β -ungesättigten Carbonsäurederivates (z.B. Acrylsäure, Methacrylsäure oder Dimethacrylsäure) soll in einem Gehalt von 32 bis 100 Teile bezogen auf 100 Teile des EPDM in dem Elastomer enthalten sein. Es hat sich herausgestellt, daß bei einem Einsatz von weniger als 32 Teile des Metallsalzes der Riemen nur zu einer Übertragung geringerer Leistungen geeignet ist. Des weiteren können diese Riemen bei Öleinfluß zu Defekten neigen.

Die Elastomermischung für Antriebsriemen enthält weiterhin aus dem Stand der Technik bekannte Zusatz- bzw. Füllstoffe. So werden für die Vernetzung 1 bis 10 Teile eines Peroxydes (z.B. Dicumylperoxyd) eingesetzt. Des weiteren sind weitere Vernetzungshilfsmittel verwendbar. Als Füllstoffe kommen z.B. weiße Füllstoffe, wie Silicate, Oxide oder Carbonate des Aluminiums, Calciums oder des Magnesiums zum Einsatz. Als weißer Füllstoff kann auch Kieselsäure verwendet werden. Diese weißen Füllstoffe können in Kombination mit z.B. Ruß eingemischt werden.

Weiterhin ist vorteilhaft, wenn als Weichmacher polare Weichmacher eingesetzt werden, da diese eine bessere Haftung zum Festigkeitsträger und damit eine höhere Lebensdauer des Antriebsriemen bewirken. Der positive Einfluß des polaren Weichmachers z.B. Esterweichmacher-DOS, TOTM) auf die Eigenschaften des Antriebsriemens waren nicht zu erwarten, da EPDM eher zu den unpolaren Polymeren zählen. Vorteilhaft sind Weichmachermengen von 0 bis 30 Teilen in Verbindung mit einem Gesamtfüllstoffanteil (Summe aller Füllstoffe) von 0 bis 60 Teilen. Diese Kombination hat sich bewährt, da die Antriebsriemen dann einen geringeren Abrieb aufweisen.

Vorteilhafterweise soll die Decklage und/oder der Grundkörper anorganische und/oder organische Kurzfasem mit einer Länge zwischen 1 bis 6 mm aufweisen. Diese Kurzfasern bewirken eine Erhöhung der Festigkeit der Elastomermatrix. Insbesondere, wenn die Kurzfasern in den Grundkörper des Antriebsriemens eingebettet sind, verleihen sie dem Riemen einen geringeren Abrieb und ein verbessertes Geräuschverhalten. Die Anbindung der Kurzfasern, deren Anteil in der Elastomermatrix 1 bis 10 Teile betragen soll, kann mit herkömmlichen Haftvermittlersystemen (z. B. RFL-Dip) erfolgen.

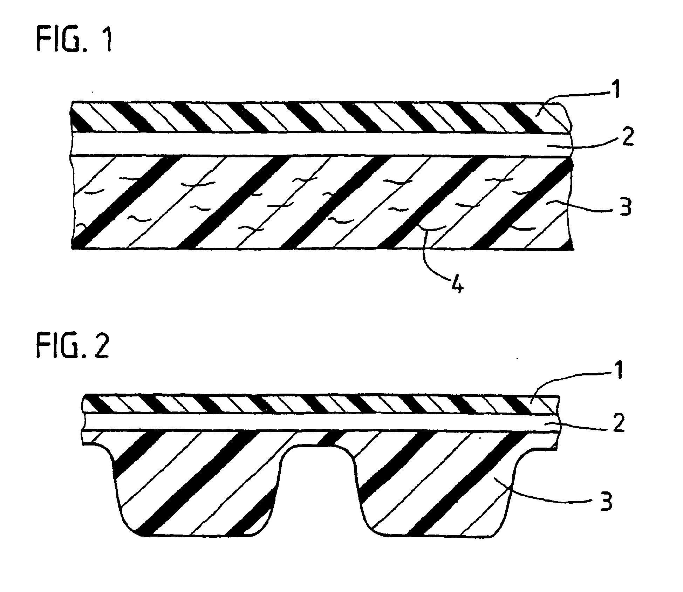

Anhand der folgenden Tabelle und den Figuren 1 und 2 soll die Erfindung näher erläutert werden.

| Bestandteile | Mischung (Gewichtsteile) | | |
|---|---|---|---|
| | A | B | C |
| EPDM, Ethylengehalt ca. 73 Gew.% | - | - | 100 |
| EPDM, Ethylengehalt ca. 55 Gew.% | 100 | 100 | - |
| Zinkdiacrylat | 40 | 60 | 40 |
| weiße Füllstoffe | 10 | 10 | 10 |
| pol. Weichmacher (TOTM) | 7 | 7 | 7 |
| Ruß N 550 | 25 | 25 | 25 |
| Dicumylperoxyd | 5 | 5 | 5 |
| | | | |

| Eigenschaften | | | |
|---|---|---|---|
| Zugfestigkeit (N/mm²) | 19,1 | 18,9 | 19,0 |
| Modul 50% | 6,6 | 10,6 | 7,0 |
| Reißdehnung (%) | 140 | 100 | 130 |
| Lebensdauer des Riemens (h) | > 500 | > 500 | |
| Abrieb auf Motor 24 h (%) | 3 | < 1 | |
| Riemenlauf bei - 40°C | ok | ok | defekt |
| Glastemperatur (T_{G} in °C) | - 42 | - 42 | - 33 |
| Ölquellung 24 h, 100°C (Vol%) | 57 | 45 | 70 |

Die Riemen, die die Elastomermischungen A bzw. B aufweisen, zeigen überraschenderweise trotz einer geringen Reißdehnung und des hohen Moduls eine hohe Lebensdauer. Diese hohe Lebensdauer war nicht zu erwarten, da Riemen mit hohen Moduli (>3) unter dynamischer Belastung im allgemeinen nach kurzer Zeit ausfallen. Der Riemen A weist neben einer hohen dynamischen Tüchtigkeit und auch eine hervorragende Kälteflexibilität auf. Die Elastomermischung A kann daher vorzugsweise für Keilrippenriemen verwendet werden, der dann einen geringen Abrieb und eine hohe Strukturfestigkeit auch bei Öleinwirkung besitzt. Die Elastomermischung B weist außer einem sehr geringen Abrieb und einer guten Kälteflexibilität auch eine geringere ölquellung auf. Da sich diese Mischung insbesondere durch einen extrem hohen Modul auszeichnet, ist mit diesem Matrial eine hohe Kraftübertragung möglich, so daß diese Mischungen für z.B. Industriezahnriemen verwendet werden können. Im Vergleich dazu ist der Riemen mit der Mischung C aufgrund seiner hohen Glastemperatur dynamisch nicht so belastbar.

In den Figuren 1 und 2 ist ein Keilrippenriemen (Figur 1) und ein Zahnriemen (Figur 2) dargestellt. Die Antriebsriemen beider Figuren zeigen eine Decklage 1 aus elastomerem Material, Festigkeitsträger 2 und einem elastomerem Grundkörper 3. Prinzipiell ist es auch möglich, daß der Antriebsriemen ein Ummantelungsgewebe aufweist.

In der Figur 1 ist zusätzlich dargestellt, daß der Elastomergrundkörper 3, der aus der Mischung A bestehen soll, Kurzfasern 4 mit einer Länge von ca. 4 mm aufweist. Diese Kurzfasern verleihen dem Antriebsriemen eine erhöhte Festigkeit, einen geringeren Abrieb und ein verbessertes Geräuschverhalten. Prinzipiell ist es natürlich auch möglich, daß die elastomere Decklage 1 Kurzfasern enthält. Auch ist es denkbar, andere Antriebsriemenarten, die aus der erfindungsgemäßen Elastomermischung bestehen, mit Kurzfasern zu versehen. Die Kurzfasern in Figur 1 sollen vorteilhafterweise aus Polyester bestehen.

Die Figur 2, die einen Zahnriemen zeigt, dessen Decklage 1 und Grundkörper 3 aus der Mischung B aufgebaut ist, weist die bereits erwähnten Merkmale (geringer Abrieb, gute Kälteflexibilität, hohe Leistungsübertragung, geringe Ölquellung) auf.

Es werden erfindungsgemäß Antriebsriemen erzielt, die eine hohe Kälteflexibilität aufweisen und gleichzeitig gute dynamische Charakteristika besitzen. Des weiteren konnten Eigenschaften, wie z.B. der Abrieb oder auch das Ölquellverhalten positiv beeinflußt werden.

## Patentansprüche

1. Antriebsriemen mit im Wesentlichen einer elastomeren Decklage, Festigkeitsträgern und einem elastomeren Grundkörper,
**dadurch gekennzeichnet, dass** die Decklage und/oder der Grundkörper aus einer peroxydisch vernetzten Elastomermischung besteht, die bezogen auf 100 Teile Kautschuk 100 Teile eines Ethylen-Propylen-Dien-Copolymerisats (EPDM) mit einem Ethylengehalt bezogen auf das Gewicht des EPDM von 50 bis 65 Gewichtsprozent und einem Diengehalt des EPDM < 10 Gewichtsprozent enthält und gegebenenfalls weitere Bestandteile, wie Weichmacher und Füllstoffe, aufweist und dass die Elastomermischung zumindest ein Metallsalz eines α,β-ungesättigten Carbonsäurederivates in einer Menge von 32 bis 100 Teilen enthält.

2. Antriebsriemen nach Anspruch 1, **dadurch gekennzeichnet, daß** das Metallsalz des α, β-ungesättigten Carbonsäurederivates das Zinksalz eines Acrylsäurederivates ist.

3. Antriebsriemen nach Anspruch 1 und/oder 2, **dadurch gekennzeichnet, daß** die Elastomermischung einen polaren Weichmacher aufweist.

4. Antriebsriemen nach Anspruch 3, **dadurch gekennzeichnet, daß** der Anteil des polaren Weichmachers zwischen 0 und 30 Teilen und der Anteil der gesamten Füllstoffe zwischen 0 und 60 Teilen liegt.

5. Antriebsriemen nach zumindest einem der vorhergehenden Ansprüche, **dadurch gekennzeichnet, daß** die Decklage und/oder der Grundkörper anorganische und/oder organische Kurzfasern mit einer Länge zwischen 1 bis 6 mm enthält.

6. Antriebsriemen nach Anspruch 5, **dadurch gekennzeichnet, daß** die Kurzfasern einen Anteil von 1 bis 10 Teilen aufweisen.

7. Keilrippenriemen nach zumindest einem der vorhergehenden Ansprüche.

8. Zahnriemen nach zumindest einem der vorhergehenden Ansprüche.

## Claims

1. Drive belt, having substantially an elastomeric top layer, reinforcing members and an elastomeric base, **characterized in that** the top layer and/or the base are/is formed from a peroxide-cross-linked elastomeric mixture which contains, relative to 100 parts rubber, 100 parts of an ethylene-propylene-diene copolymer (EPDM) with an ethylene content of 50 to 65 per cent by weight relative to the weight of EPDM and a diene content of the EPDM < 10 per cent by weight, and said mixture possibly includes additional constituent ingredients, such as plasticizers and fillers, and **in that** the elastomeric mixture contents at least one metallic salt of an α,β-unsaturated carboxylic acid derivative in a quantity of 32-100 parts.

2. Drive belt according to claim 1, **characterized in that** the metallic salt of the α,β-unsaturated carboxylic acid derivative is the zinc salt of an acrylic acid derivative.

3. Drive belt according to claim 1 and/or 2, **characterized in that** the elastomeric mixture includes a polar plasticiser.

4. Drive belt according to claim 3 **characterized in that** the proportion of the polar plasticizer is between 0 and 30 parts, and the proportion of the total fillers is between 0 and 60 parts.

5. Drive belt according to at least one of the preceding claims, **characterized in that** the top layer and/or the base contain/contains inorganic and/or organic short fibres having a length of between 1 and 6 mm.

6. Drive belt according to claim 5, charactrised in that the short fibres make up a proportion of 1 to 10 parts.

7. V-ribbed belt according to at least one of the preceding claims.

8. Toothed belt according to at least one of the preceding claims.

## Revendications

1. Courroie d'entraînement comprenant sensiblement une couche de protection élastomère, des supports assurant la résistance et un corps de base élastomère, **caractérisée en ce que** la couche de protection et/ou le corps de base sont réalisés dans un melange d'élastomère réticulé avec un peroxyde, qui contient, par rapport à 100 parties de caoutchouc, 100 parties d'un copolymérisat d'éthylène-propylène-diène (EPDM) avec une teneur en éthylène de 50 à 65 % en poids par rapport au poids d'EPDM et une teneur en diène dans l'EPDM, inférieure à 10 % en poids par rapport au poids d'EPDM et, le cas échéant, d'autres composants, tels que des plastifiants et des matières de charge, et **en ce que** le mélange d'élastomère contient au moins un sel métallique d'un dérivé d'acide carbonique α,β-insaturé dans une quantité de 32 à 100 parties.

2. Courroie d'entraînement selon la revendication 1, **caractérisée en ce que** le sel métallique d'un dérivé d'acide carbonique a,13-insaturé est un sel de zinc d'un dérivé d'acide acrylique.

3. Courroie d'entraînement selon la revendication 1 et/ou 2, **caractérisée en ce que** le mélange d'élastomère est un plastifiant polaire.

4. Courroie d'entraînement selon la revendication 3, **caractérisée en ce que** la part de plastifiant polaire se situe entre 0 et 30 parties et la part de la totalité des matières de charge se situe entre 0 et 60 parties.

5. Courroie d'entraînement selon au moins l'une des revendications précédentes, **caracatérisée en ce que** la couche de protection et/ou le corps de base contiennent des fibres courtes anorganiques et/ou organiques avec une longueur de 1 à 6 mm.

6. Courroie d'entraînement selon la revendication 5, **caractérisée en ce que** les fibres courtes sont contenues à raison de 1 à 10 parties.

7. Courroie trapézoidale à nervures selon au moins l'une des revendications précédentes.

8. Courroie dentée selon au moins l'une des revendications précédentes.
